# EUROPEAN PATENT SPECIFICATION

(11) **EP 4 372 511 B1**
(45) Date of publication and mention of the grant of the patent: **18.12.2024**
(21) Application number: 22208590.4
(22) Date of filing: 21.11.2022
(51) Int. Cl.: G05D 1/246, G05D 1/648, G05D 1/698, G05D 105/15, G05D 107/20, G05D 109/10

(54) **SYSTEM AND METHOD FOR CONTROLLING MULTIPLE ROBOTIC MOWERS**
SYSTEM UND VERFAHREN ZUR STEUERUNG MEHRERER ROBOTISCHER MÄHER
SYSTÈME ET PROCÉDÉ DE COMMANDE DE MULTIPLES TONDEUSES ROBOTIQUES

(43) Date of publication of application: 22.05.2024
(73) Proprietor: SMAUT Technology s.r.o., 198 00 Praha (CZ)
(72) Inventor: Sopik, Vincenc, 79001 Jeseník (CZ); Grunt, Jan, 67905 Bukovinka (CZ)
(74) Representative: Klickow & Wetzel PartGmbB

(56) References cited:
- US-A1- 2020 375 093
- US-A1- 2022 039 313
- SNT. AUTONOMOUS MOWERS: "The autonomous system of lawn mower Spider Autonomous 2.0 navigated by satellite navigation.", 13 May 2022 (2022-05-13), XP093040969, Retrieved from the Internet <URL:https://www.youtube.com/watch?v=BPu8sIco2ko> [retrieved on 20230421]
- SNT. AUTONOMOUS MOWERS: "Spider Autonomous - The new best commercial lawn mower with GPS.", 12 May 2022 (2022-05-12), XP093043050, Retrieved from the Internet <URL:https://www.youtube.com/watch?v=oh9WU5E1-BY> [retrieved on 20230430]

## Description

The invention relates to a system for controlling multiple robotic mowers.

Further, the invention relates to a method for controlling multiple robotic mowers.

Robotic mowers are already used for at least partial autonomous or manually and remotely controlled mowing operations today. For example, robotic lawn mowers are used for work areas like gardens, where the grass is constantly kept short. In other applications larger robots with more mowing power are required, for example for keeping solar fields free of higher vegetation. For these large robotic mowers, a manual human control with a remote controller is applied today due to safety concerns. This is because these large mowers may at least cause severe injuries to human or animals as well as serious damage to things or themselves, when they get out of control.

To cover large work areas in reduced time effort it is already known to use multiple robotic mowers in parallel. Nevertheless, the known systems lack of a high degree of automatization, reliability and/or ease of use.

Larger manually controlled mowing operations require a high degree of attention of the operators to ensure a full coverage of the work area and to avoid collisions. Due to fatigue of human operators after several hours in operation this high degree cannot always be maintained until the mowing operation is finished.

US 2020/375093 A1 and the videos "The autonomous system of lawn mower Spider Autonomous 2.0 navigated by satellite navigation" and "Spider Autonomous - The new best commercial lawn mower with GPS" retrievable at youtube.com disclose known systems for controlling multiple robotic mowers. The systems are designed to plan and to control the mowing operation for at least two robotic mowers on a defined work area and comprise a server that is wirelessly connected to the at least to robotic mowers. The server is designed to calculate the working paths for the robotic mowers.

Nevertheless, the known system still lack of some disadvantages when it comes to loss of connection between a robotic mower and the server.

Therefore, it is an object of the invention to provide a system for controlling multiple robotic mowers, to overcome at least some of the disadvantages of the state of the art.

This object is solved by a system for controlling multiple robotic mowers according to claim 1.

It is another object of the invention to provide a method for controlling multiple robotic mowers, to overcome at least some of the disadvantages of the state of the art.

This object is solved by a method for controlling multiple robotic mowers according to claim 11.

In the dependent claims advantageous embodiments of the invention are claimed.

The following disclosed features of a system for controlling multiple robotic mowers and a method for controlling multiple robotic mowers are part of the invention in all practicable combinations.

A system for controlling multiple robotic mowers according to the invention comprises at least one server and at least two robotic mowers and is designed to plan and to control the mowing operation of the at least two robotic mowers on a defined work area.

In embodiments of the invention the server is a remote server which can be operated independent of the location with respect to location of the at least two robotic mowers and/or the work area.

The robotic mowers and the server are connected by a wireless communication link.

In preferred embodiments of the invention the wireless communication link is realized by a wireless telecommunication network like a GSM-network, UMTS-network, LTE-network, 5G-network or a similar telecommunication network. Other radio networks like for example LoRa, Sigfox or any suitable private channel radio network may also be used in embodiments of the invention.

The server is designed to receive work area related data at least comprising geolocations allowing the server to create a map of the work area.

In embodiments of the invention these geolocations are manually measured coordinates on the perimeter of the work area which are entered in the user portal and sent to the server or coordinates transmitted directly or indirectly from a GNSS positioning device used to record coordinates on the perimeter of the work area to the server. The server is designed to automatically connect these coordinates to generate the map of the work area.

In embodiments of the invention these geolocations are manually measured coordinates on the perimeter of the work area which are entered into the user portal and sent to the server or coordinates transmitted directly or indirectly from a GNSS positioning device used to record coordinates on the perimeter of the work area to the server. The server is designed to automatically connect these coordinates to generate the map of the work area.

In embodiments of the invention the coordinates provided to the server for generating the map of the work area are two-dimensional (2D) coordinates comprising the latitude and longitude values.

In embodiments of the invention the server is designed to generate a multi-layer map of the work area, wherein a first layer of the separate layers of the multi-layer map comprises the work area defined at least by its perimeter coordinates, a second layer comprises specified obstacles in the work area and optional additional layers comprise additional information regarding the work area, for example the quality of the GNSS-signal and/or the LTE-signal in dependence of the location on the work area, especially areas without any signal, or other data relevant for the navigation of the robotic mowers.

In preferred embodiments of the invention the system comprises a user terminal wherein the server is connected to the user terminal. The user terminal is for example realized by a portable user device like a smartphone, a tablet pc or a laptop. The user terminal is designed to provide a user portal, where information regarding a planned, running or a past mowing operation is been made available for the user and user input may be entered and communicated to the server.

In preferred embodiments of the invention the user terminal and the server are connected by a wireless communication link. In preferred embodiments of the invention the wireless communication link is realized by a wireless telecommunication network like a GSM-network, UMTS-network, LTE-network, 5G-network or a similar telecommunication network. Other radio networks like for example LoRa, Sigfox or any suitable private channel radio network may also be used in embodiments of the invention.

In embodiments of the invention the user portal is designed to input certain parameters to the system like the number of robotic mowers assigned to the mowing operation, the desired cutting height of the mowing units of the respective robotic mowers and/or to set a certain orientation of at least one of the robotic mowers in a certain section of the working path (e.g. to allow operation at steep slopes or other demanding terrain) and/or to define at least one refueling / recharging or maintenance zone (service zone) to which a robotic mower is guided when required.

In embodiments of the invention the user portal is designed to receive geolocation inputs required for the server to generate the map of the work area and/or the at least one working path per robotic mower.

In embodiments of the invention the user portal is designed to allow a user a monitoring of the at least two robotic mowers with respect to the status and conditions of the robotic mowers especially during the mowing operation and/or to check and/or change the at least one calculated working path for each robotic mower for a mowing operation before the start or at any time during the mowing operation.

For example, the user portal is designed to show the map of the work area, the calculated working paths, the current positions, the fuel level / the remaining battery energy, the engine load, the total operating hours, the total driven distance and/or warning or error messages of the robotic mowers. This data allows the user for example to locate the robotic mowers and/or to plan maintenances and/or to adapt the operating instructions for a planned mowing operation. The monitoring of the robotic mowers is been made possible even if the robotic mowers are out of sight.

In embodiments of the invention the user portal is designed to provide management functions for managing a planned or running mowing operation with multiple robotic mowers. These management functions are realized by the possibility to register the robotic mowers to be used for a mowing operation, to register the at least one operator taking part in the mowing operation and to assign at least one robotic mower to each of the one or more operators in embodiments of the invention. Especially for large mowing operations with many robotic mowers and multiply operators this feature allows to effectively manage and monitor the robotic mowers.

Additional information assigned to the individual coordinates for example via the user portal may give the server additional information on how to connect the individual coordinates to the perimeter in certain embodiments of the invention. For example, numbers may be manually or automatically assigned to the individual coordinates or groups of coordinates to specify the order of the coordinates to be connected for example to the boundary of the work area or the coordinates or groups of coordinates may be named.

In other embodiments of the invention the perimeter coordinates may be recorded by manually guiding a robotic mower along the perimeter of the work area and sent to the server.

In preferred embodiments of the invention the server is additionally designed to receive the positions of obstacles within the work area and to include the corresponding positions in the map of the work area.

In especially preferred embodiments of the invention the server is furthermore designed to receive robot specific information on the at least two robotic mowers to be used and to use the robot specific information for the calculation of the at least one working path per robotic mower. This robot specific information may for example comprise at least one dimension of the robotic mowers (e.g. the width) and/or the width covered by the mowing unit of the robotic mowers in embodiments of the invention.

The server is designed to calculate at least one working path for each robotic mower assigned to a mowing operation to mow a predefined work area using the provided data regarding the work area. The working paths are calculated to completely cover the work area or a defined sub area during the mowing operation in advantageous embodiments of the invention.

In preferred embodiments of the invention the server is designed to calculate the working paths such that collisions of the robotic mowers with any of the specified obstacles are avoided.

In preferred embodiments of the invention the server is designed to receive 2D-coordinates of the work area, to generate a 2D-map of the work area and to calculate 2D work paths for the robotic mowers. This enables a system with less required memory space and faster calculations of working paths and correction data compared to the use of three dimensional (3D) coordinates and a 3D-map.

The at least two robotic mowers are designed to receive the assigned calculated work path from the server and to follow the assigned work path during the mowing operation.

The at least two robotic mowers are designed to permanently determine their positions at least during the mowing operation and to send the position data to the server.

In embodiments of the invention the robotic mowers are designed to measure at least one measurement value related to the status of the respective robotic mower and/or external influences on the respective robotic mower.

In preferred embodiments of the invention the system for controlling multiple robotic mowers comprises at least one local correction station to realize a high accuracy GNSS in combination with at least one GNSS receiver mounted on each robotic mower.

In addition or alternatively to the local correction station correction data from a public RTK network (RTK means real time kinematic), like for example APOS in Austria or CZEPOS in the Czech Republic, is used to realize a high-accuracy GNSS in embodiments of the invention.

The robotic mowers are each designed to establish a wireless communication link to the at least one local correction station in the corresponding embodiments of the invention and to use the at least one local correction station to realize the high-accuracy GNSS.

The robotic mowers are designed to establish an LTE communication link or apply a similar telecommunication network between the corresponding robotic mower and the local correction station in preferred embodiments of the invention to allow the data transfer at high data rates.

The server is designed to permanently monitor the position of the robotic mowers at least during the mowing operation and to detect deviations of the current position of the robotic mowers and the respective assigned work path.

In preferred embodiments of the invention the server is designed to calculate correction data for the robotic mowers based at least on the position of the respective robotic mower and the deviation from the assigned work path and to send this correction data to the corresponding robotic mower to control the robotic mower back on the assigned track.

In preferred embodiments of the invention the system is designed to determine the position of the robotic mowers and to calculate the corresponding correction data at least several times per second. This enables the system to achieve a very high accuracy of the position control of the robotic mowers relative to the calculated working path in the range of 1 cm.

In preferred embodiments of the invention the server is designed to consider additional information to calculate the correction data for a robotic mower. This additional information may comprise sensor-data provided by the respective robotic mower like the axis-dependent inclination of the robotic mower.

In embodiments of the invention at least one of the robotic mowers is designed to permanently measure its axis-dependent inclination and/or the heading and/or the turning position of at least one wheel of the robotic mower and/or the speed of the robotic mower determined via GNSS and/or the rotational speed of the wheels of the robotic mower. The turning position of a wheel means the turning position of a wheel relative to the longitudinal axis of the robotic mower.

In embodiments of the invention the server is designed to receive at least one of these data from at least one robotic mower and to use the data for calculating the correction data for the corresponding robotic mower.

In preferred embodiments of the invention the robotic mower is designed to at least temporarily store determined parameters that are to be transmitted for example to the server in the case of a loss of connection to the telecommunication network and to send these parameters to the intended recipient immediately after the connection is restored. These parameters may comprise for example the position and/or status data of the respective robotic mower.

In embodiments of the invention the system for controlling multiple robotic mowers comprises at least one operator device for the optional manual control of at least one robotic mower of the system.

In preferred embodiments of the invention the operator device is realized as a remote controller.

In these embodiments at least one of the robotic mowers is designed to establish a wireless communication link, for example a Bluetooth and/or a UHF-communication link, between the robotic mower and the operator device.

The operator device is designed to manually control at least one robotic mower and to switch between a manual control mode and an autonomous mode of the at least one robotic mower.

In manual control mode the operator has the full control over the at least one robotic mower.

In advantageous embodiments of the invention the operator device comprises a display and is designed to display the status of the at least one controlled robotic mower and/or the working path along which the respective robotic mower is to be guided.

For example, in cases where an obstacle occurs that has not been initially specified and been considered by the server for calculating the working path, the operator is able to manually switch to the manual control mode, to drive the robotic mower around the obstacle and to switch back to the autonomous mode.

In embodiments of the invention the manual control mode can also be activated in the event of a collision with an unknown obstacle.

In embodiments of the invention at least one of the robotic mowers and/or the server is/are designed to record the new working path manually adapted to bypass the obstacle and the server is designed to save the updated working path.

In preferred embodiments of the invention the operator device and/or the user terminal is designed to send indication data for a manually adapted working path segment directly or indirectly to the server to indicate if the manual adaption of the working path is related to a new permanent obstacle. The server is designed to update the corresponding working path only if a new permanent obstacle indication is sent related to the manual path adaption and/or to include the new obstacle in the map for the work area.

In embodiments of the invention the server is designed to save all versions of the working paths. In some of these embodiments the working path for a robotic mower can be selected by a user or an operator out of these tracks before starting the mowing operation.

In advantageous embodiments of the invention the operator device is designed to control multiple robotic mowers at the same time.

In embodiments of the invention the operator device and/or the user portal is designed to select a plurality of robotic mowers to be controlled and to define one leading mower to be individually controlled to define the remaining robotic mower(s) as followers. In this following mode the robotic mower(s) defined as follower(s) is/are designed to automatically follow the leading robotic mower or another follower in a defined distance. The order of the followers can be defined either manually by the operator with the help of the operator device, the user portal or automatically (e.g. based on the order of the definition as a follower). This helps the operator to easily guide a group of robotic mowers for example from a drop-off zone to the start of their individual working paths or from the ends of the working paths to a collection zone.

In embodiments of the invention the robotic mowers defined as followers are controlled to follow the leading robotic mower by the server.

In embodiments of the invention the parameters of the multiple robotic mowers to be controlled in the following mode, for example the order of the robotic mowers or the distance between the robotic mowers, can be set and changed via the user portal.

In preferred embodiments of the system for controlling multiple robotic mowers according to the invention an emergency stop function for immediately stopping at least one of the robotic mowers is implemented. The emergency stop function may for example be triggered either by a detection of a collision of a robotic mower, by pressing an emergency stop button on an operator device or the robotic mower or by a server command sent to the server in embodiments of the invention.

A server command for an emergency stop may for example be sent to a robotic mower if the GNSS signal is lost for a time longer than a predefined threshold or if the position or movement data of the robotic mower is not plausible.

In embodiments of the invention at least one of the robotic mowers is equipped with an inertial navigation module to still allow an estimation of the position of the robotic mower in case of a GNSS signal loss. In these embodiments the server is designed to receive the inertial navigation data of the at least one robotic mower and to estimate the position of the at least one robotic mower.

In preferred embodiments of the invention the server is designed to adapt the working path in case of a GNSS signal loss such that the robotic mower is moved to a position with a GNSS signal within a certain time limit after signal loss using a map or a map layer including the GNSS signal strength at least for parts of the work area. As soon as the GNSS signal is recovered a precise determination of the position of the robotic mower is possible.

In embodiments of the invention the server is designed to calculate the expected route to lead the respective robotic mower to an expected location with a GNSS signal. If the GNSS signal is not restored within 30 seconds, the robotic mower is stopped by the server. This is especially useful for systems with robotic mowers without inertial navigation functions.

The system according to the invention is designed to establish a backup communication link for a robotic mower losing the connection to the server. Therefore, the robotic mowers of the system are designed to establish an inter-robot communication link between each other.

The inter-robot communication link is realized as a UHF-communication link or a Bluetooth communication link in embodiments of the invention.

A first robotic mower losing its direct communication link to the server is therefore designed to establish a communication link to a second robotic mower with a working communication link to the server and to request the second robotic mower to work as an auxiliary communication unit for the communication of the first robotic mower with the server.

The robotic mowers of the system according to the invention are therefore designed to transmit data intended for the server and received from a robotic mower without a direct communication link to the server to the server and to transmit data received from the server and intended for the robotic mower without a direct communication link to the server to the robotic mower without a direct communication link to the server in these embodiments of the invention.

In some of these embodiments of the invention the communication of the robotic mower without a direct communication link to the server and the server handled via the robotic mower working as an auxiliary communication unit is reduced either by reducing the frequency of the communication (e.g. update of position data and correction data more rarely) and/or by reducing the scope of the transmitted data (e.g. some of the status and/or measurement data is not sent from the robotic mower and/or only limited correction data is being sent from the server).

In embodiments of the invention the use of the backup communication link between a robotic mower and the server is restricted to a maximum duration and the respective robotic mower is stopped, when the maximum duration has expired. This helps especially in embodiments with a limited scope of the transmitted data to avoid a larger deviation from the required high accuracy of the position control of the respective robotic mower.

In embodiments of the invention with at least one defined refueling, recharging or maintenance zone (service zone) the system is designed to permanently monitor a maintenance requirement, for example by monitoring the according measurement values like the energy remaining in the battery or the fuel level, of at least one of the robotic mowers during the operation. If one of these values changes to a critical state indicating that refueling, recharging or a maintenance is required or will be required soon, the server is designed to calculate a service track for the corresponding robotic mower to guide it to the nearest service zone.

The server is designed to send the calculated service track to the corresponding robotic mower and the robotic mower is designed to follow the received service track to the selected service zone.

In embodiments of the invention the server is designed to calculate a service track for a robotic mower when the remaining battery level or the remaining fuel level is 20 % of the maximum level.

In other embodiments of the invention the server is designed to calculate a service track for a robotic mower when the remaining battery level or the remaining fuel level is 15 % of the maximum level.

In advantageous embodiments of the invention, the server is designed to use the stored map information for the working path calculations also for calculating the service tracks. Therefore, any known obstacles and/or zones without a GNSS signal are avoided with the service tracks too.

In preferred embodiments of the invention, the server is designed to calculate the service tracks based on determining the shortest distance between the current position of the respective robotic mower and the closest service zone.

In preferred embodiments of the invention the server is designed to evaluate which parts of the remaining working path of the respective robotic mower can still be covered on the way of the robotic mower to the selected service zone without a high risk for running out of fuel / energy and a separate service track different from the working path will only be used for the rest of the route to the service zone in order to increase efficiency.

In advantageous embodiments of the invention the mowing unit is switched on, when the robotic mower is using the working path. If the robotic mower is using a separate service track, the mowing unit is switched off.

In embodiments of the invention the server is also designed to calculate service tracks to guide the robotic mowers to the start of the respective calculated working paths. These service tracks for example start at a drop-off zone, where the robotic mowers are dropped-off for the upcoming mowing operation on the work area.

In preferred embodiments of the system, the server is designed to permanently monitor the position of the robotic mowers and to avoid a collision of the robotic mowers.

In embodiments of the invention the server is designed to permanently monitor the position and the trajectory of the controlled robotic mowers and to estimate collisions of the robotic mowers with each other.

As soon as a collision is estimated, the server is designed to control the corresponding robotic mowers such that a collision is avoided.

In preferred embodiments the server is designed to control the speed of at least one of the robotic mowers estimated to collide, such that the collision is avoided.

In advantageous embodiments of the invention the speed of at least one of the robotic mowers estimated to collide is temporarily reduced to avoid the collision. In case of two robotic mowers estimated to collide the speed of one of the robotic mowers estimated to collide is temporarily reduced to avoid the collision in embodiments of the invention.

The method for controlling multiple robotic mowers according to the invention comprises at least the following steps:
- Calculating at least one working path for each of at least two robotic mowers for a work area defined by a map on a server, wherein the server is designed to calculate at least one working path for each robotic mower assigned to a mowing operation to mow a predefined work area using provided data regarding the work area and wherein the working paths are calculated to completely cover the work area or a defined sub area during the mowing operation,
- Assigning the working paths to the robotic mowers,
- Sending assigned working paths to the corresponding robotic mowers,
- Saving the assigned working paths on the robotic mowers,
- Starting the mowing operation of the robotic mowers,
- Monitoring of the position of the robotic mowers, wherein the robotic mowers are designed to permanently determine their positions during the mowing operation and the server is designed to detect deviations of the current position of the robotic mowers and the respective assigned working path.

As soon as the working paths have been calculated on the server and/or saved on the robotic mowers, the corresponding steps can be omitted in future mowing operations on the respective work area.

In preferred embodiments of the invention the method additionally comprises the following steps:
- Calculation of correction data for the robotic mowers on the server based at least on the deviation of the measured actual position of the robotic mowers and the precalculated working paths
- Sending the correction data to the robotic mowers
- Implementing the correction data on the robotic mowers.

In embodiments of the method a high-accuracy GNSS is used for the positioning of the robotic mowers.

In embodiments of the method a local correction station is used to implement the high-accuracy GNSS.

In addition or alternatively to the local correction station correction data from a public RTK network (RTK means real time kinematic), like for example APOS in Austria or CZEPOS in the Czech Republic, is used to realize a high-accuracy GNSS in embodiments of the invention.

In embodiments of the method according to the invention the map of the work area is generated on the server using at least coordinates corresponding to locations on the perimeter of the work area. The number of the required coordinates to generate a 2D map of the work area is depending on the shape of the work area.

In embodiments of the invention the server generates a multi-layer map of the work area, wherein a first layer of the separate layers of the multi-layer map comprises the work area defined at least by its perimeter coordinates, a second layer comprises specified obstacles in the work area and optional additional layers comprise additional information regarding the work area, for example the quality of the GNSS-signal and/or the LTE-signal in dependence of the location on the work area or other data relevant for the navigation of the robotic mowers.

In preferred embodiments of the method according to the invention the locations of known obstacles in the work area are provided to the server in advance to calculating the working paths for the robotic mowers and the obstacles are considered by the server when calculating the working paths such that collisions of the robotic mowers and the obstacles are avoided in operation.

In embodiments of the method according to the invention the position and optionally status information of the robotic mowers is/are permanently monitored at least during mowing operation, the position and optionally status information are sent from the robotic mowers to the server and from the server to a user portal, in which the data is being displayed to a user.

In embodiments of the method according to the invention the server permanently estimates the risk for a collision of the controlled robotic mowers with each other based on the position data and the trajectory of the individual robotic mowers.

In preferred embodiments of the system, the server permanently monitors the position of the robotic mowers and controls the robotic mowers to avoid a collision of the robotic mowers with each other.

In embodiments of the invention the server therefore permanently monitors the position and the trajectory of the controlled robotic mowers and estimates the probability of collisions of the robotic mowers with each other on their paths.

In advantageous embodiments of the invention the size and optionally also the heading of the robotic mowers is considered when the probability of a collision is determined. This enables the avoidance of collisions of robotic mowers without actually crossing working paths / trajectories but with an overlap of the areas covered by the bodies of the robotic mowers.

As soon as a collision is estimated, the server controls at least one of the corresponding robotic mowers such that a collision of these robotic mowers with each other is avoided.

In embodiments of the invention the server calculates a possible collision within a first large radius of for example 200 meters from the center of each robotic mower. The server used the values for the current speed of the robotic mowers of the system and their current position, from which the server is able to predict a potential collision. The presence of another robotic mower within a predefined safety radius, for example of 5 meters, from the center of a robotic mower is identified as a critical approach. In other embodiments of the invention an overlap of these safety radius is considered as a critical approach. The server controls at least one of the robotic mowers identified for a critical approach to avoid the critical approach and therefor also the collision.

In preferred embodiments the server controls the speed of at least one of the robotic mowers estimated to collide, such that the collision is avoided.

In advantageous embodiments of the invention the speed of at least one of the robotic mowers estimated to collide is temporarily reduced to avoid the collision. In case of two robotic mowers estimated to collide, the speed of one of the robotic mowers estimated to collide is temporarily reduced to avoid the collision in embodiments of the invention.

In embodiments of the invention the speed of the robotic mower is halved while still calculating the predicted encounter location. If there is still a risk of a collision, the speed of the robotic mower is reduced by another half again. If the server still detects a possible collision, it will stop the robotic mower and wait until the threat of collision has passed.

In embodiments of the method according to the invention a user portal is implemented on a user terminal and the user portal outputs information regarding a planned or running mowing operation.

In embodiments of the invention the user portal selectively outputs the generated map of the work area, the calculated working paths of the robotic mowers, the positions of the robotic mowers and/or status information of the individual robotic mowers. This allows a user to monitor the individual robotic mowers as well as the overall mowing operation.

The status information of the robotic mowers may comprise the fuel level / the remaining battery energy, the engine load, the engine runtime, the autonomous runtime, the runtime of the knives, and/or the driven distance in kilometers.

In embodiments of the invention the user portal outputs the information regarding a running mowing operation in real-time and is updated several times per second.

In embodiments of the invention specifications can be entered before the map of the work area is generated and/or the mowing paths for a mowing operation are calculated, settings can be changed and/or adaptions to the generated map of the work area and/or the calculated mowing paths can be made through the user portal. This allows a user to specify and to control the mowing operation on a general level.

In embodiments of the method according to the invention the user portal provides management functions for managing a planned or running mowing operation with multiple robotic mowers. These management functions are realized by the possibility to register the robotic mowers to be used for a mowing operation, to register the at least one operator taking part in the mowing operation, to assign at least one robotic mower to each of the one or more operators in embodiments of the invention. Especially for large mowing operations with many robotic mowers and multiply operators this feature allows to effectively manage and monitor the robotic mowers.

In embodiments of the invention the maintenance requirements of the robotic mowers are permanently monitored by the server. The maintenance requirements may comprise the need for refueling / recharging, the exchange of mowing accessories (for example the cutting knifes / blades) and/or repair.

In embodiments of the invention a notification on detected maintenance requirement of a robotic mower is sent to the assigned operator device and/or the user portal.

In advantageous embodiments of the invention the server calculates a service track to a defined service zone as soon as a maintenance requirement has been detected for a robotic mower.

In embodiments of the invention with at least one defined refueling, recharging or maintenance zone (service zone) the according measurement values like the energy remaining in the battery or the fuel level of at least one of the robotic mowers are permanently monitored during the operation. If one of these values changes to a critical state indicating that refueling, recharging or a maintenance is required or will be required soon, the server calculates a service track for the corresponding robotic mower to guide it to the nearest service zone.

The server sends the calculated service track to the corresponding robotic mower and the robotic mower follows the received service track to the selected service zone.

In embodiments of the invention the server determines a maintenance requirement and/or calculates a service track for a robotic mower when the remaining battery level or the remaining fuel level is 20 % of the maximum level.

In other embodiments of the invention the server determines a maintenance requirement and/or calculates a service track for a robotic mower when the remaining battery level or the remaining fuel level is 15 % of the maximum level.

In advantageous embodiments of the invention, the server uses the stored map information for the working path calculations also for calculating the service tracks. Therefore, any known obstacles and/or zones without a GNSS signal are avoided with the calculated service tracks in these embodiments too.

In preferred embodiments of the invention, the server calculates the service tracks based on determining the shortest distance between the current position of the respective robotic mower and the closest service zone.

In preferred embodiments of the invention the server evaluates which parts of the remaining working path of the respective robotic mower can still be covered on the way of the robotic mower to the selected service zone without a high risk for running out of fuel / energy and a separate service track different from the working path will only be used for the rest of the route to the service zone in order to increase efficiency.

In advantageous embodiments of the invention the mowing unit is switched on, when the robotic mower is using the working path. If the robotic mower is using a separate service track, the mowing unit is switched off.

In embodiments of the invention the server is also designed to calculate service tracks to guide the robotic mowers to the start of the respective calculated working paths. These service tracks for example start at a drop-off zone, where the robotic mowers are dropped-off for the upcoming mowing operation on the work area.

In embodiments of the method according to the invention the robotic mowers permanently check their connection to the server.

The method according to the invention realizes a backup communication link for a robotic mower losing the connection to the server is established between the server and the respective robotic mower. This may for example occur, when a robotic mower loses the LTE-connection in the respective embodiments of the invention. Therefore, the robotic mower losing the direct connection to the server establishes an inter-robot communication link to another robotic mower of the system.

The inter-robot communication link is realized as a UHF-communication link or a Bluetooth communication link in embodiments of the invention.

A first robotic mower losing its direct communication link to the server establishes a communication link to a second robotic mower of the system with a working communication link to the server and requests the second robotic mower to work as an auxiliary communication unit for the communication of the first robotic mower with the server.

A robotic mower working as an auxiliary communication unit for another robotic mower transmits data intended for the server and received from a robotic mower without a direct communication link to the server and transmit data received from the server and intended for the robotic mower without a direct communication link to the server to the robotic mower without a direct communication link to the server in these embodiments of the invention.

In some of these embodiments of the invention the communication of the robotic mower without a direct communication link to the server and the server handled via the robotic mower working as an auxiliary communication unit is reduced either by reducing the frequency of the communication (e.g. updating of position data and sending of correction data happens more rarely) and/or by reducing the scope of the transmitted data (e.g. some of the status and/or measurement data is not sent from the robotic mower and/or only limited correction data is being sent from the server).

In embodiments of the invention the use of the backup communication link between a robotic mower and the server is restricted to a maximum duration and the respective robotic mower is stopped, when the maximum duration has expired. This helps especially in embodiments with a limited scope of the transmitted data to avoid a larger deviation from the required high accuracy of the position control of the respective robotic mower.

In embodiments of the method according to the invention an operator manually controls at least one of the robotic mowers individually for a certain time or a certain task.

In advantageous embodiments of the invention the operator controls multiple robotic mowers at the same time with an operator device.

In embodiments of the invention the operator selects a plurality of robotic mowers to be manually controlled with the help of the operator device and defines one leading mower to be individually controlled and defines the remaining robotic mowers as followers. The robotic mowers defined as followers are automatically following the leading robotic mower or another follower in a defined distance. The order of the followers can be defined either manually by the operator with the help of the operator device or automatically (e.g. based on the order of the definition as a follower). This helps the operator to easily guide a group of robotic mowers for example from a drop-off zone to the start of their individual working paths or from the ends of the working paths to a collection zone.

In embodiments of the method according to the invention the method is implemented to make use of all or at least some of the features of the system for controlling multiple robotic mowers according to the invention.

In embodiments of the method for controlling multiple robotic mowers a system for controlling multiple robotic mowers according to the invention is used.

In other embodiments of the invention the teaching according to the invention is applied to applications other than mowing. Therefore, the teaching according to the invention may be used for example for robots designed for cleaning, vacuuming, snow removal, solar panel cleaning, construction, plowing, harvesting or other agricultural machines, for example for the work in vineyards or orchards.

The drawings explained hereinafter show exemplary embodiments of the invention. They show:
- Figure 1:: A schematic block diagram of a system for controlling multiple robotic mowers according to the invention,
- Figure 2:: A schematic illustration of the following mode according to the invention,
- Figure 3:: A schematic illustration of the collision avoidance according to the invention,
- Figure 4:: A flow chart for an exemplary method for controlling multiple robotic mowers according to the invention,
- Figure 5:: A schematic illustration for the calculation of a service track and
- Figure 6:: A schematic illustration of the backup communication link between a robotic mower and the server via another robotic mower.

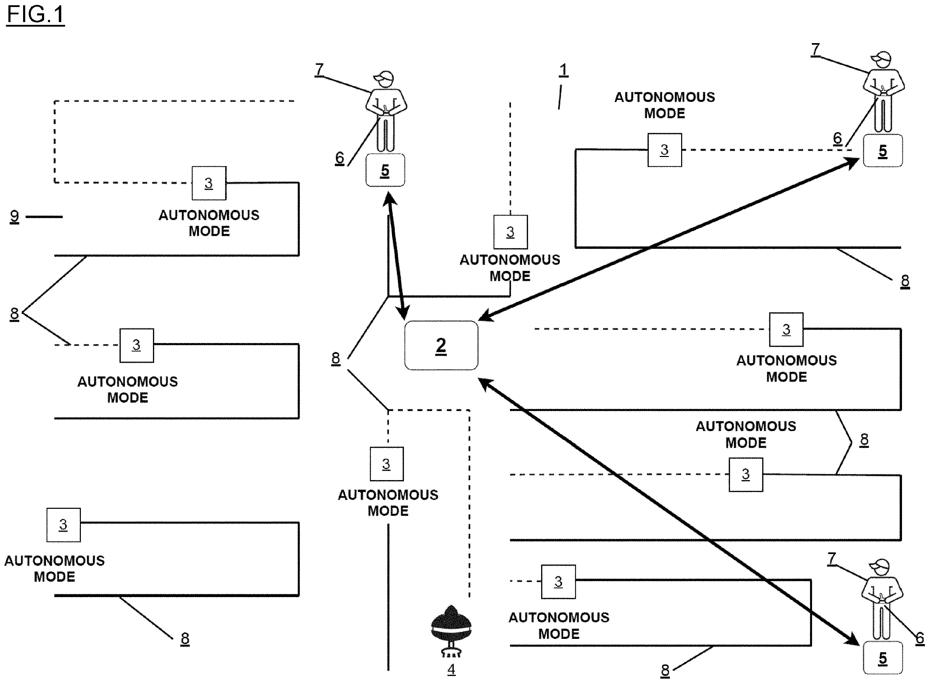

Figure 1 shows a schematic block diagram of a system (1) for controlling multiple robotic mowers (3) according to the invention. The shown system (1) comprises a server (2) and nine robotic mowers (3). The robotic mowers (3) are autonomously working on their assigned working paths (8) calculated by the server (9) for the mowing operation on the work area (9).

The system (1) further comprises a local correction station (4) for the GNSS to realize a high-accuracy GNSS and to achieve a high accuracy of the positioning of the robotic mowers (3). Furthermore, the system (1) comprises user terminals (5) to monitor and control the overall mowing operation and operator devices (6) to allow the operators (7) to manually control assigned robotic mowers (3) when required.

For example, three robotic mowers (3) may be assigned to each operator (7) in this example.

The server (2) automatically calculates the working paths (8) for the robotic mowers (3) assigned for the mowing operation on a defined work area (9) and either sends the working paths (8) directly to the robotic mowers (3) or to the user terminals (5) in advance to allow a check of the calculated working paths (8), to adapt the calculated working paths (8), an assignment of the robotic mowers (3) to operators (7) or to include other instructions relevant for the mowing operation into the respective work tasks for the robotic mowers (3) and/or the operators (7).

The server (2) permanently monitors the positions of the robotic mowers (3) and optionally additional status information of the robotic mowers (3), evaluates this data with respect to potentially required corrections of the positions, imminent collisions, maintenance requirements and controls the robotic mowers (3) accordingly. Additionally, the relevant data is sent to the user terminals (5) to allow a real-time monitoring of the mowing operation.

Subsequent to a mowing operation the evaluation of the collected data allows for example conclusions regarding required maintenances and/or effectivity of the mowing operation.

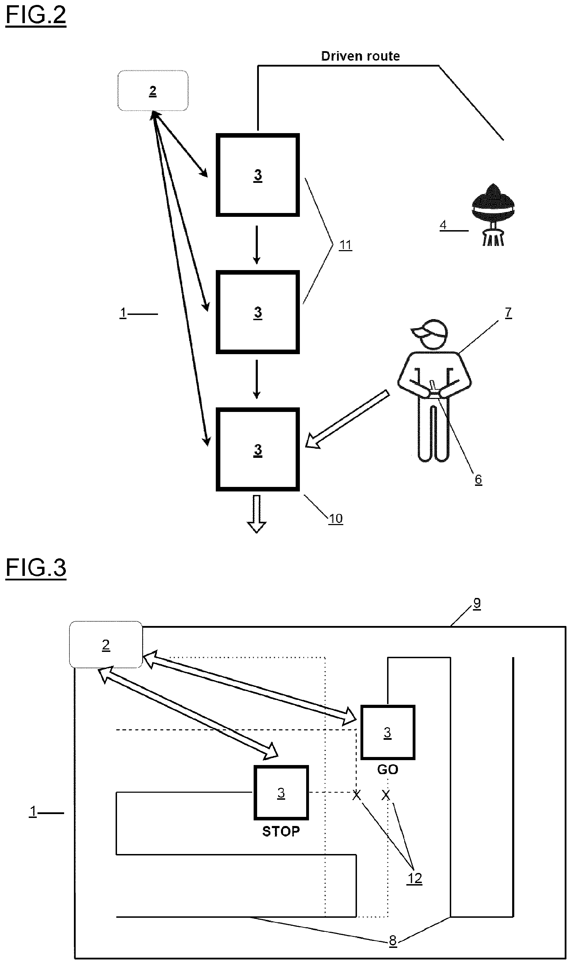

In figure 2 the following mode, allowing an operator to move multiple robotic mowers (3) at the same time, is illustrated.

The operator (7) controls three robotic mowers (3) with the help of one operator device (6) by defining a leader (10) which is manually controlled by the operator (7) and followers (11), autonomously following the defined leader (10) in a preset distance. The server (2) monitors the positions of the robotic mowers (3) and controls the followers (11) to follow the leader (10).

Figure 3 shows an illustration of the collision avoidance according to the invention. The server (2) permanently monitors the positions of the robotic mowers (3) and their trajectory on the assigned working paths (8) on the work area (9). With this data the server (2) permanently estimates the probability of a collision of the controlled robotic mowers (3) with each other. In the shown illustration the server (2) has detected potential collision locations (12) on both working paths (8).

At these collision locations (12) the working paths (8) do not cross, as they do later in operation, but considering the size of the bodies of the robotic mowers (3), they would collide at the collision locations (12). To avoid the collision of the robotic mowers (3) the server (2) reduces the speed or even strops the robotic mower (3) on the left in this drawing. Therefore, the other robotic mower (3) can pass the danger zone without a collision and the robotic mower (3) stopped or with reduced speed is controlled back to the intended operating speed.

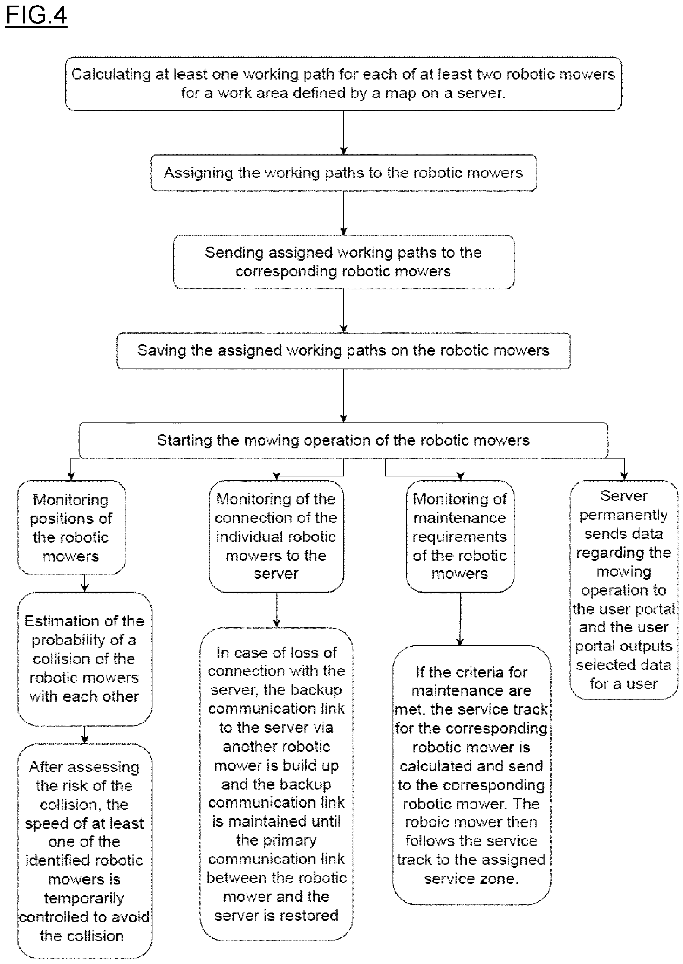

In Figure 4 a flow chart of the method for controlling multiple robotic mowers according to the invention is shown.

The process steps in the shown embodiment begin with calculating at least one working path for at least two robotic mowers for a work area defined by a map on a server, assigning the working paths to the robotic mowers, sending assigned working paths to the corresponding robotic mowers and saving the working paths on the robotic mowers.

If this has already been done in the past, for example when preparing a past mowing operation on the same work area, these steps may be skipped. If specifications of the work area have changed, for example due to new obstacles or an adapted perimeter, the steps should be repeated.

When the working path data is saved on the robotic mowers assigned to the mowing operation, the next step is starting the mowing operation of the robotic mowers.

While the mowing operation is in progress, a monitoring of the position of the robotic mowers with the estimation of the probability of a collision of the robotic mowers with each other, a monitoring of the connection of the individual robotic mowers to the server and a monitoring of maintenance requirements of the robotic mowers runs in parallel or serially repeated at short intervals.

If a collision of at least two of the robotic mowers is estimated, the speed of at least one of the robotic mowers identified is temporarily controlled to avoid the collision.

If a loss of connection to the server is detected by one of the robotic mowers a backup communication link to the server via another robotic mower is build up and the backup communication link is maintained until the primary communication link between the robotic mower in the server is restored.

If a maintenance requirement is detected for a robotic mower, a service track for the corresponding robotic mower is calculated and sent to the corresponding robotic mower. The robotic mower then follows the service track to the assigned service zone.

The server permanently sends data regarding the mowing operation to the user portal and the user portal outputs selected data for a user.

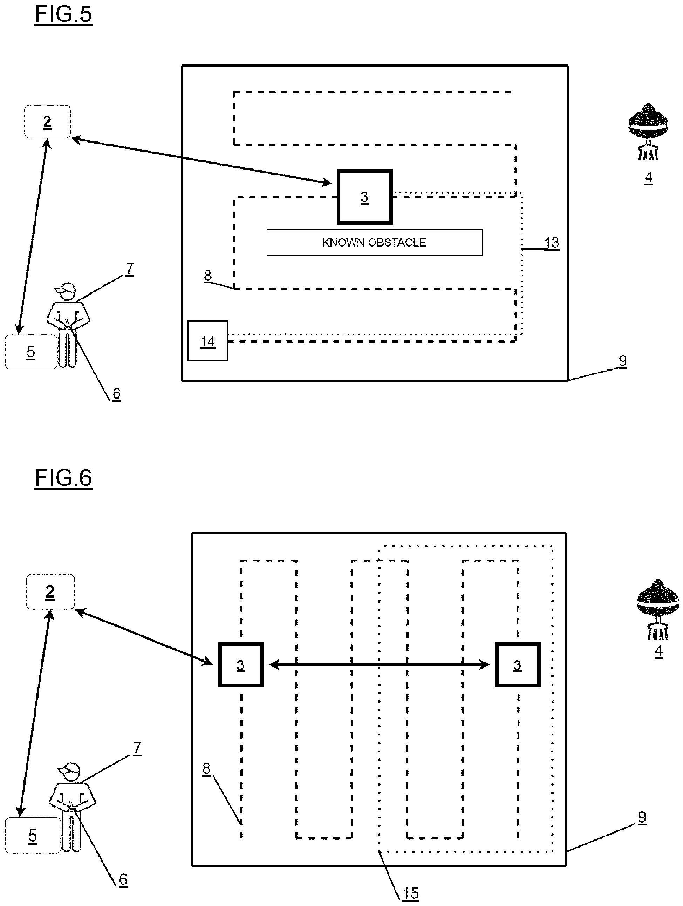

Figure 5 shows a schematic illustration of the calculation of a service track (13) for a robotic mower (3) according to embodiments of the invention. The robotic mower (3) travels on the precalculated working path (8) during the mowing operation. The server (2) monitors any maintenance requirement of the robotic mower (3). As soon as a maintenance requirement is detected, the server (2) calculates a service track (13) to guide the robotic mower (3) to the selected service zone (14).

In the example shown, the service track (13) follows the remaining working path (9) in the beginning and then guides the robotic mower (3) on a separate track and a piece of the passed working path (9) to the service zone (14), while known obstacles are avoided.

The operator (7) is informed about the maintenance requirement and the calculated service track (13) via the user portal on the user terminal (5) and/or the operator device (6).

Figure 6 shows a schematic illustration of the backup communication link between a robotic mower (3) losing its direct communication link with the server (2) via another robotic mower (3). A first robotic mower (3) operates in a shadow area (15) without a signal for the communication technology used for the primary communication of the robotic mowers (3) with the server (2) and therefore establishes the backup communication link to the server (2) via the other robotic mower (3) outside of the shadow area (15).

## Claims

1. System (1) for controlling multiple robotic mowers (3) designed to plan and to control the mowing operation of the at least two robotic mowers (3) on a defined work area (9), the system (1) comprising at least one server (2) and at least two robotic mowers (3), wherein the robotic mowers (3) and the server (2) are connected by a wireless communication link and wherein the server (2) is designed to calculate at least one working path (8) for each robotic mower (3) assigned to a mowing operation to mow a predefined work area (9) using provided data regarding the work area (9), wherein the working paths (8) are calculated to completely cover the work area (9) or a defined sub area during the mowing operation and the at least two robotic mowers (3) are designed to receive the assigned calculated work path (8) from the server (2) and to follow the assigned work path (8) during the mowing operation, wherein the at least two robotic mowers (3) are designed to permanently determine their positions at least during the mowing operation and to send the position data to the server (2) and wherein the server (2) is designed to permanently monitor the position of the robotic mowers (3) at least during the mowing operation and to detect deviations of the current position of the robotic mowers (3) and the respective assigned work path, **characterized in that**, the system (1) is designed to establish a backup communication link for a robotic mower (3) losing the connection to the server (2), wherein a first robotic mower (3) losing its direct communication link to the server (2) is designed to establish a communication link to another robotic mower (3) with a working communication link to the server (2) and to request the other robotic mower (3) to work as an auxiliary communication unit for the communication of the first robotic mower (3) with the server (2).

2. System (1) according to claim 1, **characterized in that**, the system (1) is designed to reduce the communication of the robotic mower (3) without a direct communication link to the server (2) and the server (2) handled via the robotic mower (3) working as an auxiliary communication unit either by reducing the frequency of the communication and/or by reducing the scope of the transmitted data.

3. System (1) according to one of the claims 1 and 2, **characterized in that**, the system (1) comprises a user terminal (5) wherein the server (2) is connected to the user terminal (5) by a wireless communication link and the user terminal (5) is designed to provide a user portal, where information regarding a planned, running or a past mowing operation is been made available for the user as an output and user input may be entered and communicated to the server (2).

4. System (1) according to claim 3, **characterized in that**, the user portal is designed to receive geolocation inputs required for the server (2) to generate the map of the work area (9) and/or the at least one working path (8) per robotic mower (3).

5. System (1) according to one of the claims 3 and 4, **characterized in that**, the user portal is designed to allow a user a monitoring of the at least two robotic mowers (3) with respect to the status and conditions of the robotic mowers (3) and/or to check the at least one calculated working path (8) for each robotic mower (3) for a mowing operation before the start.

6. System (1) according to one of the claims 3 to 5, **characterized in that**, the user portal is designed to provide management functions for managing a planned or running mowing operation with multiple robotic mowers (3).

7. System (1) according to one of the claims 1 to 6, **characterized in that**, the system (1) comprises at least one operator device (6) for the optional manual control of at least one robotic mower (3) of the system (1), wherein the operator device (6) is designed to select a plurality of robotic mowers (3) to be controlled and to define one leading mower (10) to be individually controlled with the help of the operator device (6) and to define the remaining selected robotic mowers (3) as followers (11), wherein the robotic mowers (3) defined as followers (11) are designed to automatically follow the leading robotic mower (10) or another follower (11) in a defined distance.

8. System (1) according to one of the claims 1 to 7, **characterized in that**, at least one service zone is defined and the system (1) is designed to permanently monitor the service requirements of at least one of the robotic mowers (3) during the operation and to calculate a service track for the corresponding robotic mower (3) to guide it to the nearest service zone, when a service requirement is detected, wherein the server (2) is designed to send the calculated service track to the corresponding robotic mower (3) and the robotic mower (3) is designed to follow the received service track to the selected service zone.

9. System (1) according to claim 8, **characterized in that**, the server (2) is designed to use the stored map information for the working path calculations also for calculating the service tracks.

10. System (1) according to one of the claims 1 to 9, **characterized in that**, the server (2) is designed to permanently monitor the position of the robotic mowers (3) and to avoid a collision of the robotic mowers (3), wherein the server (3) is designed to permanently monitor the position and the trajectory of the controlled robotic mowers (3) and to estimate potential collisions of the robotic mowers (3) with each other and wherein the server (2) is designed to control the corresponding robotic mowers (3) such that a collision is avoided, as soon as a potential collision is estimated.

11. Method for controlling multiple robotic mowers (3) comprising the following steps:
- Calculating at least one working path (8) for each of at least two robotic mowers (3) for a work area (9) defined by a map on a server (2), wherein the server (2) is designed to calculate at least one working path (8) for each robotic mower (3) assigned to a mowing operation to mow a predefined work area (9) using provided data regarding the work area (9) and wherein the working paths (8) are calculated to completely cover the work area (9) or a defined sub area during the mowing operation,
- Assigning the working paths (8) to the robotic mowers (3),
- Sending the assigned working paths (8) from the server (2) to the corresponding robotic mowers (3),
- Saving the assigned working paths (8) on the robotic mowers (3),
- Starting the mowing operation of the robotic mowers (3),
- Monitoring of the position of the robotic mowers (3), wherein the robotic mowers (3) are designed to permanently determine their positions during the mowing operation and the server (2) is designed to detect deviations of the current position of the robotic mowers (3) and the respective assigned working path, **characterized in that**, a backup communication link for a robotic mower (3) losing the connection to the server (2) is established between the server (2) and the respective robotic mower (3), wherein a first robotic mower (3) losing its direct communication link to the server (2) establishes a communication link to a second robotic mower (3) with a working communication link to the server (2) and requests the second robotic mower (3) to work as an auxiliary communication unit for the communication of the first robotic mower (3) with the server (2), wherein a robotic mower (3) working as an auxiliary communication unit for another robotic mower (3) transmits data intended for the server (2) and received from the robotic mower (3) without a direct communication link to the server (2) to the server (2) and transmit data received from the server (2) and intended for the robotic mower (3) without a direct communication link to the server (2) to the robotic mower (3) without a direct communication link to the server (2).

12. Method according to claim 11, **characterized in that**, the position and status information of the robotic mowers (3) are permanently monitored at least during the mowing operation, the position and status information are sent from the robotic mowers (3) to the server (2) and from the server (2) to a user portal, in which the data is being displayed to a user.

13. Method according to one of the claims 11 and 12, **characterized in that**, the server (2) permanently estimates the risk for a collision of the controlled robotic mowers (3) with each other based on the position data and the trajectory of the individual robotic mowers (3) and the server (2) controls the robotic mowers (3) to avoid a collision of the robotic mowers (3) with each other.

14. Method according to one of the claims 11 to 13, **characterized in that**, the maintenance requirements of the robotic mowers (3) are permanently monitored by the server (2) and the server (2) calculates a service track to a defined service zone as soon as a maintenance requirement has been detected for a robotic mower (3), wherein the server (2) sends the calculated service track to the corresponding robotic mower (3) and the robotic mower (3) follows the received service track to the selected service zone.

15. Method according to one of the claims 11 to 14, **characterized in that**, a system (1) according to one of the claims 1 to 10 is used.

## Patentansprüche

1. System (1) zur Steuerung mehrerer Mähroboter (3), das zur Planung und Steuerung des Mähvorgangs der mindestens zwei Mähroboter (3) auf einer definierten Arbeitsfläche (9) ausgebildet ist, wobei das System (1) mindestens einen Server (2) und mindestens zwei Mähroboter (3) umfasst, wobei die Mähroboter (3) und der Server (2) über eine drahtlose Kommunikationsverbindung verbunden sind und wobei der Server (2) dazu ausgebildet ist, für jeden Mähroboter (3), der einem Mähvorgang zugewiesen ist, mindestens einen Arbeitspfad (8) zum Mähen der vordefinierten Arbeitsfläche (9) unter Verwendung von bereitgestellten Daten über die Arbeitsfläche (9) zu berechnen, wobei die Arbeitspfade (8) so berechnet werden, dass sie den Arbeitsbereich (9) oder einen definierten Teilbereich während des Mähvorgangs vollständig abdecken, und die mindestens zwei Mähroboter (3) dazu eingerichtet sind, den zugewiesenen berechneten Arbeitspfad (8) vom Server (2) zu empfangen und dem zugewiesenen Arbeitspfad (8) während des Mähvorgangs zu folgen, wobei die mindestens zwei Mähroboter (3) dazu ausgebildet sind, ihre Positionen zumindest während des Mähvorgangs permanent zu bestimmen und die Positionsdaten an den Server (2) zu übermitteln und wobei der Server (2) dazu ausgebildet ist, die Position der Mähroboter (3) zumindest während des Mähvorgangs permanent zu überwachen und Abweichungen der aktuellen Position der Mähroboter (3) und des jeweiligen zugewiesenen Arbeitspfads zu erkennen, **dadurch gekennzeichnet, dass** das System (1) dazu ausgebildet ist, eine Backup-Kommunikationsverbindung für einen Mähroboter (3) herzustellen, der die Verbindung zum Server (2) verliert, wobei ein erster Mähroboter (3), der seine direkte Kommunikationsverbindung zum Server (2) verliert, so ausgebildet ist, dass er eine Kommunikationsverbindung zu einem anderen Mähroboter (3) mit einer funktionierenden Kommunikationsverbindung zum Server (2) herstellt und den anderen Mähroboter (3) auffordert, als eine Hilfskommunikationseinheit für die Kommunikation des ersten Mähroboters (3) mit dem Server (2) zu arbeiten.

2. System (1) nach Anspruch 1, **dadurch gekennzeichnet, dass** das System (1) so ausgelegt ist, dass es die über den Mähroboter (3) als Hilfskommunikationseinheit erfolgende Kommunikation des Mähroboters (3) ohne direkte Kommunikationsverbindung zum Server (2) und dem Server (2) dadurch reduziert, dass entweder eine Verringerung der Kommunikationsfrequenz und/oder durch eine Reduzierung des Umfangs der übertragenen Daten erfolgt.

3. System (1) nach einem der Ansprüche 1 und 2, **dadurch gekennzeichnet, dass** das System (1) ein Benutzergerät (5) umfasst, wobei der Server (2) mit dem Benutzergerät (5) über eine drahtlose Kommunikationsverbindung verbunden ist und das Benutzergerät (5) zur Bereitstellung eines Benutzerportals ausgebildet ist, in dem Informationen über einen geplanten, laufenden oder vergangenen Mähvorgang für den Benutzer als Ausgabe zur Verfügung gestellt werden und Benutzereingaben eingegeben und an den Server (2) übermittelt werden können.

4. System (1) nach Anspruch 3, **dadurch gekennzeichnet, dass** das Benutzerportal dazu eingerichtet ist, Geolokalisierungs-Eingaben zu empfangen, die für den Server (2) erforderlich sind, um die Karte des Arbeitsbereichs (9) und/oder des mindestens einen Arbeitspfads (8) je Mähroboter (3) zu erzeugen.

5. System (1) nach einem der Ansprüche 3 und 4, **dadurch gekennzeichnet, dass** das Benutzerportal dazu eingerichtet ist, einem Benutzer eine Überwachung der mindestens zwei Mähroboter (3) hinsichtlich des Status und des Zustands der Mähroboter (3) zu ermöglichen und/oder den mindestens einen berechneten Arbeitspfad (8) für jeden Mähroboter (3) für einen Mähvorgang vor dem Start zu überprüfen.

6. System (1) nach einem der Ansprüche 3 bis 5, **dadurch gekennzeichnet, dass** das Benutzerportal dazu eingerichtet ist, dass es Verwaltungsfunktionen zur Verwaltung eines geplanten oder laufenden Mähbetriebs mit mehreren Mährobotern (3) bereitstellt.

7. System (1) nach einem der Ansprüche 1 bis 6, **dadurch gekennzeichnet, dass** das System (1) mindestens eine Bedienvorrichtung (6) zur optionalen manuellen Steuerung mindestens eines Mähroboters (3) des Systems (1) umfasst, wobei die Bedienvorrichtung (6) dazu ausgebildet ist, mehrere zu steuernde Mähroboter (3) auszuwählen und einen führenden Mähroboter (10) zu definieren, der mit Hilfe der Bedienvorrichtung (6) individuell gesteuert wird, und die übrigen ausgewählten Mähroboter (3) als Folger (11) zu definieren, wobei die als Folger (11) definierten Mähroboter (3) dazu ausgebildet sind, dem führenden Mähroboter (10) oder einem anderen Folger (11) in einem definierten Abstand automatisch zu folgen.

8. System (1) nach einem der Ansprüche 1 bis 7, **dadurch gekennzeichnet, dass** mindestens eine Servicezone definiert ist und das System (1) dazu ausgebildet ist, den Servicebedarf mindestens eines der Mähroboter (3) während des Betriebs permanent zu überwachen und einen Service-Pfad für den entsprechenden Mähroboter (3) zu berechnen, um ihn zur nächstgelegenen Servicezone zu führen, wenn ein Servicebedarf erkannt wird, wobei der Server (2) so eingerichtet ist, dass er den berechneten Service-Pfad an den entsprechenden Mähroboter (3) sendet und der Mähroboter (3) so eingerichtet ist, dass er dem empfangenen Service-Pfad zu der ausgewählten Servicezone folgt.

9. System (1) nach Anspruch 8, **dadurch gekennzeichnet, dass** der Server (2) dazu ausgebildet ist, die gespeicherten Karteninformationen für die Arbeitspfadberechnungen auch für die Berechnung der Service-Pfade zu verwenden.

10. System (1) nach einem der Ansprüche 1 bis 9, **dadurch gekennzeichnet, dass** der Server (2) dazu ausgebildet ist, die Position der Mähroboter (3) permanent zu überwachen und eine Kollision der Mähroboter (3) zu vermeiden, wobei der Server (3) ausgebildet ist, die Position und die Bewegungsrichtung der gesteuerten Mähroboter (3) permanent zu überwachen und mögliche Kollisionen der Mähroboter (3) miteinander abzuschätzen und wobei der Server (2) eingerichtet ist, die entsprechenden Mähroboter (3) so zu steuern, dass eine Kollision vermieden wird, sobald eine mögliche Kollision erwartet wird.

11. Verfahren zur Steuerung mehrerer Mähroboter (3) mit den folgenden Schritten:
- Berechnen mindestens eines Arbeitspfades (8) für jeden von mindestens zwei Mährobotern (3) für einen durch eine Karte definierten Arbeitsbereich (9) auf einem Server (2), wobei der Server (2) dazu ausgebildet ist, mindestens einen Arbeitspfad (8) für jeden Mähroboter (3), der einem Mähvorgang zum Mähen eines vordefinierten Arbeitsbereiches (9) zugeordnet ist, unter Verwendung von bereitgestellten Daten bezüglich des Arbeitsbereiches (9) zu berechnen, und wobei die Arbeitspfade (8) so berechnet werden, dass sie den Arbeitsbereich (9) oder einen definierten Teilbereich während des Mähvorganges vollständig abdecken,
- Zuweisung der Arbeitspfade (8) zu den Mährobotern (3),
- Senden der zugewiesenen Arbeitspfade (8) vom Server (2) an die entsprechenden Mähroboter (3),
- Speichern der zugewiesenen Arbeitspfade (8) auf den Mährobotern (3),
- Starten des Mähbetriebs der Mähroboter (3),
- Überwachung der Position der Mähroboter (3), wobei die Mähroboter (3) dazu ausgebildet sind, ihre Position während des Mähvorgangs permanent zu bestimmen und der Server (2) dazu eingerichtet ist, Abweichungen der aktuellen Position der Mähroboter (3) und des jeweils zugewiesenen Arbeitspfades zu erkennen,
**dadurch gekennzeichnet, dass** zwischen dem Server (2) und dem jeweiligen Mähroboter (3) eine Backup-Kommunikationsverbindung für einen Mähroboter (3), der die Verbindung zum Server (2) verliert, hergestellt wird, wobei ein erster Mähroboter (3), der seine direkte Kommunikationsverbindung zum Server (2) verliert, eine Kommunikationsverbindung zu einem zweiten Mähroboter (3) mit einer funktionierenden Kommunikationsverbindung zum Server (2) herstellt und den zweiten Mähroboter (3) auffordert, als Hilfskommunikationseinheit für die Kommunikation des ersten Mähroboters (3) mit dem Server (2) zu arbeiten, wobei ein Mähroboter (3), der als Hilfskommunikationseinheit für einen anderen Mähroboter (3) arbeitet, Daten, die für den Server (2) bestimmt sind und von dem Mähroboter (3) ohne direkte Kommunikationsverbindung zu dem Server (2) empfangen werden, an den Server (2) sendet und Daten, die von dem Server (2) empfangen werden und für den Mähroboter (3) ohne direkte Kommunikationsverbindung zu dem Server (2) bestimmt sind, an den Mähroboter (3) ohne direkte Kommunikationsverbindung zu dem Server (2) sendet.

12. Verfahren nach Anspruch 11, **dadurch gekennzeichnet, dass** die Positions- und Statusinformationen der Mähroboter (3) zumindest während des Mähvorgangs permanent überwacht werden, die Positions- und Statusinformationen von den Mährobotern (3) an den Server (2) und vom Server (2) an ein Benutzerportal gesendet werden, in dem die Daten einem Benutzer angezeigt werden.

13. Verfahren nach einem der Ansprüche 11 und 12, **dadurch gekennzeichnet, dass** der Server (2) das Risiko für eine Kollision der gesteuerten Mähroboter (3) miteinander basierend auf den Positionsdaten und der Trajektorie der einzelnen Mähroboter (3) permanent abschätzt und der Server (2) die Mähroboter (3) steuert, um eine Kollision der Mähroboter (3) miteinander zu vermeiden.

14. Verfahren nach einem der Ansprüche 11 bis 13, **dadurch gekennzeichnet, dass** der Servicebedarf der Mähroboter (3) vom Server (2) permanent überwacht wird und der Server (2) einen Service-Pfad zu einer definierten Servicezone berechnet, sobald ein Servicebedarf für einen Mähroboter (3) erkannt wurde, wobei der Server (2) den berechneten Service-Pfad an den entsprechenden Mähroboter (3) sendet und der Mähroboter (3) dem empfangenen Service-Pfad zu der ausgewählten Servicezone folgt.

15. Verfahren nach einem der Ansprüche 11 bis 14, **dadurch gekennzeichnet, dass** ein System (1) nach einem der Ansprüche 1 bis 10 verwendet wird.

## Revendications

1. Système (1) de commande de multiples tondeuses robotiques (3), conçu pour planifier et pour commander l'opération de tonte des au moins deux tondeuses robotiques (3) sur une surface de travail définie (9), le système (1) comprenant au moins un serveur (2) et au moins deux tondeuses robotiques (3), dans lequel les tondeuses robotiques (3) et le serveur (2) sont connectés par une liaison de communication sans fil et dans lequel le serveur (2) est conçu pour calculer au moins un trajet de travail (8) pour chaque tondeuse robotique (3) attribuée à une opération de tonte pour tondre une surface de travail prédéfinie (9) en utilisant des données fournies concernant la surface de travail (9), dans lequel les trajets de travail (8) sont calculés pour couvrir complètement la surface de travail (9) ou une sous-surface définie, durant l'opération de tonte, et les au moins deux tondeuses robotiques (3) sont conçues pour recevoir le trajet de travail calculé attribué (8) en provenance du serveur (2) et pour suivre le trajet de travail attribué (8) durant l'opération de tonte, dans lequel les au moins deux tondeuses robotiques (3) sont conçues pour déterminer en permanence leurs positions au moins durant l'opération de tonte et pour envoyer les données de position au serveur (2) et dans lequel le serveur (2) est conçu pour surveiller en permanence la position des tondeuses robotiques (3) au moins durant l'opération de tonte et pour détecter des écarts de la position actuelle des tondeuses robotiques (3) et du trajet de travail attribué respectif, **caractérisé en ce que** le système (1) est conçu pour établir une liaison de communication de secours pour une tondeuse robotique (3) perdant la connexion au serveur (2), dans lequel une première tondeuse robotique (3) perdant sa liaison de communication directe au serveur (2) est conçue pour établir une liaison de communication à une autre tondeuse robotique (3) avec une liaison de communication de travail au serveur (2) et pour demander à l'autre tondeuse robotique (3) pour servir d'unité de communication auxiliaire pour la communication de la première tondeuse robotique (3) avec le serveur (2).

2. Système (1) selon la revendication 1, **caractérisé en ce que** le système (1) est conçu pour réduire la communication de la tondeuse robotique (3) sans liaison de communication directe au serveur (2) et du serveur (2) pris en charge par l'intermédiaire de la tondeuse robotique (3) servant d'unité de communication auxiliaire en réduisant la fréquence de la communication et/ou en réduisant le champ des données transmises.

3. Système (1) selon l'une des revendications 1 et 2, **caractérisé en ce que** le système (1) comprend un terminal utilisateur (5) dans lequel le serveur (2) est connecté au terminal utilisateur (5) par une liaison de communication sans fil et le terminal utilisateur (5) est conçu pour fournir un portail utilisateur, où des informations concernant une opération de tonte planifiée, en cours, ou passée, ont été mises à disposition pour l'utilisateur en tant que sortie, et une entrée utilisateur peut être entrée et communiquée au serveur (2).

4. Système (1) selon la revendication 3, **caractérisé en ce que** le portail utilisateur est conçu pour recevoir des entrées de géolocalisation requises pour le serveur (2) pour générer la carte de la surface de travail (9) et/ou l'au moins un trajet de travail (8) pour chaque tondeuse robotique (3).

5. Système (1) selon l'une des revendications 3 et 4, **caractérisé en ce que** le portail utilisateur est conçu pour permettre à un utilisateur une surveillance des au moins deux tondeuses robotiques (3) en ce qui concerne l'état et les conditions des tondeuses robotiques (3) et/ou pour contrôler l'au moins un trajet de travail calculé (8) pour chaque tondeuse robotique (3) pour une opération de tonte avant le démarrage.

6. Système (1) selon l'une des revendications 3 à 5, **caractérisé en ce que** le portail utilisateur est conçu pour fournir des fonctions de gestion pour gérer une opération de tonte planifiée, ou en cours, avec de multiples tondeuses robotiques (3).

7. Système (1) selon l'une des revendications 1 à 6, **caractérisé en ce que** le système (1) comprend au moins un dispositif opérateur (6) pour la commande manuelle optionnelle d'au moins une tondeuse robotique (3) du système (1), dans lequel le dispositif opérateur (6) est conçu pour sélectionner une pluralité de tondeuses robotiques (3) destinées à être commandées et pour définir une tondeuse de tête (10) destinée à être commandée individuellement à l'aide du dispositif opérateur (6) et pour définir les autres tondeuses robotiques sélectionnées (3) en tant que suiveuses (11), dans lequel les tondeuses robotiques (3) définies en tant que suiveuses (11) sont conçues pour suivre automatiquement la tondeuse robotique de tête (10) ou une autre suiveuse (11) dans une distance définie.

8. Système (1) selon l'une des revendications 1 à 7, **caractérisé en ce qu'**au moins une zone d'entretien est définie et le système (1) est conçu pour surveiller en permanence les nécessités d'entretien d'au moins une des tondeuses robotiques (3) durant l'opération et pour calculer une voie d'entretien pour la tondeuse robotique correspondante (3) pour la guider jusqu'à la zone d'entretien le plus proche, lorsqu'une nécessité d'entretien est détectée, dans lequel le serveur (2) est conçu pour envoyer la voie d'entretien calculée à la tondeuse robotique correspondante (3) et la tondeuse robotique (3) est conçue pour suivre la voie d'entretien reçue jusqu'à la zone d'entretien sélectionnée.

9. Système (1) selon la revendication 8, **caractérisé en ce que** le serveur (2) est conçu pour utiliser les informations de carte stockées pour les calculs de trajet de travail également pour calculer les voies d'entretien.

10. Système (1) selon l'une des revendications 1 à 9, **caractérisé en ce que** le serveur (2) est conçu pour surveiller en permanence la position des tondeuses robotiques (3) et pour éviter une collision des tondeuses robotiques (3), dans lequel le serveur (3) est conçu pour surveiller en permanence la position et la trajectoire des tondeuses robotiques commandées (3) et pour estimer des collisions potentielles des tondeuses robotiques (3) les unes avec les autres, et dans lequel le serveur (2) est conçu pour commander les tondeuses robotiques correspondantes (3) de manière telle qu'une collision est évitée, dès qu'une collision potentielle est estimée.

11. Procédé de commande de multiples tondeuses robotiques (3), comprenant les étapes suivantes :
- le calcul d'au moins un trajet de travail (8) pour chacune d'au moins deux tondeuses robotiques (3) pour une surface de travail (9) définie par une carte sur un serveur (2), dans lequel le serveur (2) est conçu pour calculer au moins un trajet de travail (8) pour chaque tondeuse robotique (3) attribuée à une opération de tonte pour tondre une surface de travail prédéfinie (9) en utilisant des données fournies concernant la surface de travail (9) et dans lequel les trajets de travail (8) sont calculés pour couvrir complètement la surface de travail (9) ou une sous-surface définie durant l'opération de tonte,
- l'attribution des trajets de travail (8) aux tondeuses robotiques (3),
- l'envoi des trajets de travail attribués (8), depuis le serveur (2), aux tondeuses robotiques correspondantes (3),
- la sauvegarde des trajets de travail attribués (8) sur les tondeuses robotiques (3),
- le démarrage de l'opération de tonte des tondeuses robotiques (3),
- la surveillance de la position des tondeuses robotiques (3), dans lequel les tondeuses robotiques (3) sont conçues pour déterminer en permanence leurs positions durant l'opération de tonte et le serveur (2) est conçu pour détecter des écarts de la position actuelle des tondeuses robotiques (3) et du trajet de travail attribué respectif, **caractérisé en ce qu'**une liaison de communication de secours pour une tondeuse robotique (3) perdant la connexion au serveur (2) est établie entre le serveur (2) et la tondeuse robotique respective (3), dans lequel une première tondeuse robotique (3) perdant sa liaison de communication directe au serveur (2) établit une liaison de communication à une seconde tondeuse robotique (3) avec une liaison de communication de travail au serveur (2) et demande à la seconde tondeuse robotique (3) de servir d'unité de communication auxiliaire pour la communication de la première tondeuse robotique (3) avec le serveur (2), dans lequel une tondeuse robotique (3) servant d'unité de communication auxiliaire pour une autre tondeuse robotique (3) transmet des données, prévues pour le serveur (2) et reçues en provenance de la tondeuse robotique (3) sans liaison de communication directe au serveur (2), au serveur (2) et transmet des données, reçues en provenance du serveur (2) et prévues pour la tondeuse robotique (3) sans liaison de communication directe au serveur (2), à la tondeuse robotique (3) sans liaison de communication directe au serveur (2).

12. Procédé selon la revendication 11, **caractérisé en ce que** les informations de position et d'état des tondeuses robotiques (3) sont surveillées en permanence au moins durant l'opération de tonte, les informations de position et d'état sont envoyées, depuis les tondeuses robotiques (3), au serveur (2), et depuis le serveur (2), à un portail utilisateur, dans lequel les données sont affichées pour un utilisateur.

13. Procédé selon l'une des revendications 11 et 12, **caractérisé en ce que** le serveur (2) estime en permanence le risque d'une collision des tondeuses robotiques commandées (3) les unes avec les autres sur la base des données de position et de la trajectoire des tondeuses robotiques individuelles (3), et le serveur (2) commande les tondeuses robotiques (3) pour éviter une collision des tondeuses robotiques (3) les unes avec les autres.

14. Procédé selon l'une des revendications 11 à 13, **caractérisé en ce que** les nécessités de maintenance des tondeuses robotiques (3) sont surveillées en permanence par le serveur (2), et le serveur (2) calcule une voie d'entretien jusqu'à une zone d'entretien définie dès qu'une nécessité de maintenance a été détectée pour une tondeuse robotique (3), dans lequel le serveur (2) envoie la voie d'entretien calculée à la tondeuse robotique correspondante (3) et la tondeuse robotique (3) suit la voie d'entretien reçue jusqu'à la zone d'entretien sélectionnée.

15. Procédé selon l'une des revendications 11 à 14, **caractérisé en ce qu'**un système (1) selon l'une des revendications 1 à 10 est utilisé.
